# EUROPÄISCHE PATENTSCHRIFT

(11) **EP 1 136 840 B1**
(45) Veröffentlichungstag und Bekanntmachung des Hinweises auf die Patenterteilung: **15.09.2004**
(21) Anmeldenummer: 00125390.5
(22) Anmeldetag: 04.12.2000
(51) Int. Cl.: G01S 7/26, B60Q 1/48, G01S 13/93

(54) **Einparkhilfe für ein Kraftfahrzeug mit optischer Anzeigeeinheit**
Vehicle parking aid with optical display
Dispositif pour faciliter le stationnement d'un véhicule comportant un affichage optique

(30) Priorität: 20.03.2000 DE 10013710
(43) Veröffentlichungstag der Anmeldung: 26.09.2001
(73) Patentinhaber: Valeo Schalter und Sensoren GmbH, 74321 Bietigheim-Bissingen (DE)
(72) Erfinder: Lochte, Guido, 74235 Erlenbach (DE)
(74) Vertreter: Dreiss, Fuhlendorf, Steimle & Becker

(56) Entgegenhaltungen:
- DE-A- 4 027 231
- DE-A- 19 646 375
- DE-A- 19 646 559
- DE-A- 19 755 470

## Beschreibung

Die Erfindung betrifft eine optische Anzeigeeinheit für eine Einparkhilfe eines Kraftfahrzeugs und die Verwendung eines an sich bekannten Steuergeräts einer Einparkhilfe eines Kraftfahrzeugs gemäß dem nebengerodneten Anspruch 7.

Optische Anzeigeeinheiten werden von Steuergeräten angesteuert, die einen speziell für optische Anzeigeeinheiten vorgesehenen Ausgang aufweisen.

Bei anderen bekannten Einparkhilfen wird der Fahrer des Kraftfahrzeugs lediglich akustisch auf den Abstand des Kraftfahrzeugs zu einem Hindernis aufmerksam gemacht. Nachteilig an diesen Einparkhilfen ist, dass z. B. in Innenstadtbereichen mit hoher Lärmbelastung das akustische Signal der Einparkhilfe nicht oder nur mit Mühe wahrgenommen wird. Außerdem gibt es Situationen, in denen ein akustisches Signal als störend empfunden wird.

Da die Ausgänge zu akustischen Ausgabeeinheiten und optischen Anzeigeeinheiten unterschiedlich sind, müssen je nachdem ob der Abstand des Kraftfahrzeugs zu einem Hindernis optisch oder akustisch angezeigt werden soll verschiedene Steuergeräte eingesetzt werden, was zusätzliche Kosten verursacht.

Der Erfindung liegt die Aufgabe zugrunde, eine Einparkhilfe bereitzustellen, die eine optische Anzeigeeinheit und/oder eine akustische Ausgabeeinheit aufweist und einfach und kostengünstig realisierbar ist.

Diese Aufgabe wird erfindungsgemäß gelöst durch eine optische
Anzeigeeinheit für eine Einparkhilfe eines Kraftfahrzeugs, wobei die optische Anzeigeeinheit vom Tongeber-Ausgang eines Steuergeräts angesteuert wird, und wobei die optische Anzeigeeinheit eine Auswerteeinrichtung zum Umwandeln der Tongeber-Signale in Steuersignale für die optische Anzeigeeinheit aufweist, so dass ein kostengünstig herzustellendes Steuergerät mit einem Tongeber-Ausgang eingesetzt werden kann. Außerdem ist die erfindungsgemäße optische Anzeigeeinheit in gleichem Maße diagnosefähig wie ein Tongeber und kann bei Einparkhilfen mit akustischer Ausgabeeinheit problemlos nachgerüstet werden.

Eine Variante der Erfindung sieht vor, dass die Auswerteeinrichtung ein Mikro-Controller oder eine elektronische Auswerteschaltung ist, so dass insbesondere bei der Verwendung eines Mikro-Controllers die Auswerteeinrichtung einfach an verschiedene visuelle Darstellungsarten, wie z. B. Leucht-Dioden oder Flüssigkristallanzeigen, angepasst werden kann.

In weiterer Ergänzung der Erfindung ist vorgesehen, dass die Anzeigeeinheit den Abstand zwischen Kraftfahrzeug und einem Hindernis mittels Leuchtdioden, Leuchtdioden-Arrays oder einer Flüssigkristallanzeige anzeigt, so dass je nach gewünschter Auflösung und eventuell bereits im Kraftfahrzeug vorhandener optischer Anzeigeeinheiten die jeweils günstigste ausgewählt werden kann.

Eine weitere Ergänzung der Erfindung sehen vor, dass die Anzeigeeinheit zusätzlich einen Tongeber aufweist, so dass alternativ oder kumulativ sowohl eine visuelle als auch eine akustische Information über den Abstand zwischen Kraftfahrzeug und Hindernis an den Fahrer des Kraftfahrzeugs übermittelt wird.

Bei einer anderen Variante der Erfindung ist vorgesehen, dass die Anzeigeeinheit einen Tiefpass-Filter aufweist, so dass das Trägersignal eines analogen Tongeber-Ausgangssignals des Steuergeräts herausgefiltert wird.

Bei einer Ausführungsform der Erfindung ist vorgesehen, dass die optische Anzeigeeinheit mit einem ersten Ausgang mit dem Tongeber-Ausgang des Steuergeräts verbunden ist, dass die optische Anzeigeeinheit mit einem zweiten Ausgang mit der Zündung (Klemme 15) des Kraftfahrzeugs verbunden ist, und dass die optische Anzeigeeinheit mit einem dritten Ausgang auf Masse liegt, so dass die erfindungsgemäße optische Anzeigeeinheit nahezu ohne zusätzlichen Verkabelungsaufwand installiert werden kann.

Die eingangsgenannte Aufgabe wird auch gelöst durch die Verwendung eines Steuergeräts mit einem Tongeber-Ausgang zum Steuern einer erfindungsgemäßen optischen Anzeigeeinheit, so dass unabhängig davon, ob die Einparkhilfe eine akustische Ausgabeeinheit oder eine optische Anzeigeeinheit aufweist, das gleiche Steuergerät eingesetzt werden kann. Dadurch kann das Steuergerät in größeren Stückzahlen gebaut werden und somit die Stückkosten verringert werden. Außerdem ist aufgrund der Verwendung baugleicher Steuergeräte die Ersatzteilhaltung günstiger.

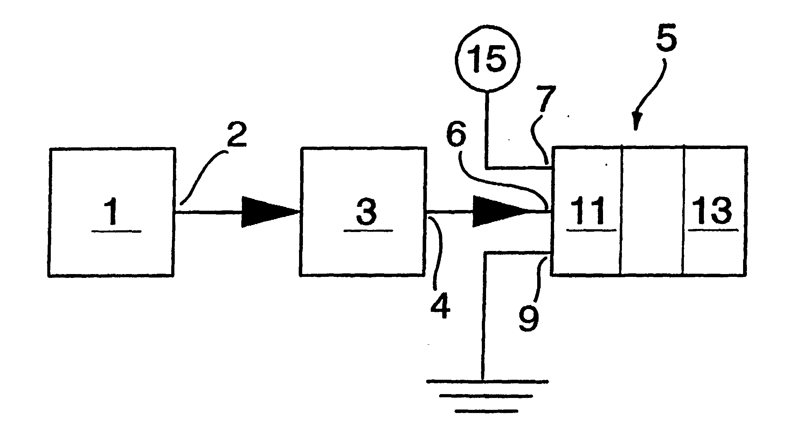

Weitere Vorteile und vorteilhafte Ausgestaltungen sind der Zeichnung und deren nachfolgenden Beschreibung sowie den Patentansprüchen entnehmbar.

Ein Ausführungsbeispiel der Erfindung ist in der Zeichnung dargestellt und nachfolgend beschrieben.

In der Figur ist ein Blockschaltbild einer erfindungsgemäßen Einparkhilfe dargestellt. Ein Abstandssensor 1 ermittelt den Abstand zwischen Kraftfahrzeug und Hindernis und gibt ein Signal 2 an ein Steuergerät 3 weiter. Das Steuergerät 3 weist mindestens einen Tongeber-Ausgang 4 auf, welcher eine optische Anzeigeeinheit 5 über deren ersten Ausgang 6 ansteuert und einen Pluspol 15 auf. Der Pluspol 15 des Steuergeräts 3 ist mit einem zweiten Ausgang 7 der optischen Anzeigeeinheit 5. Ein dritter Ausgang 9 der optischen Anzeigeeinheit 5 liegt auf Masse. Die optische Anzeigeeinheit 5 weist eine Auswerteeinrichtung 11 auf, welche das Signal des Tongeber-Ausgangs 4 des Steuergeräts 3 umwandelt, so dass mit dem Tongeber-Ausgang-Signal die optische Anzeige der optischen Anzeigeeinheit 5 angesteuert werden kann. Zusätzlich weist die optische Anzeigeeinheit 5 noch einen optionalen Tongeber 13 auf.

Das digitale oder analoge Signal des Tongeber-Ausgangs 4 des Steuergeräts 3 wird häufig durch ein Puls-Pausen-Verhältnis übermittelt. Falls das Steuergerät 3 ein analoges Steuersignal mit einer Trägerfrequenz von beispielsweise 1 kHz bereitstellt, muss in der optischen Anzeigeeinheit 5 ein Tiefpass-Filter vorgesehen werden, um die Trägerfrequenz herauszufiltern.

## Patentansprüche

1. Optische Anzeigeeinheit (5) für eine Einparkhilfe eines Kraftfahrzeugs, **dadurch gekennzeichnet, dass** die optische Anzeigeeinheit (5) vom Tongeber-Ausgang (4) eines Steuergeräts (3) angesteuert wird, und dass die optische Anzeigeeinheit (5) eine Auswerteeinrichtung (11) zum Umwandeln der Tongeber-Signale (4) in Steuersignale für die optische Anzeigeeinheit (5) aufweist.

2. Anzeigeeinheit nach Anspruch 1, **dadurch gekennzeichnet, dass** die Auswerteeinrichtung (11) ein Mikro-Controller oder eine elektronische Auswerteschaltung ist.

3. Anzeigeeinheit nach einem der vorhergehenden Ansprüche, **dadurch gekennzeichnet, dass** die optische Anzeigeeinheit (5) den Abstand zwischen Kraftfahrzeug und einem Hindernis mittels einzelner Leucht-Dioden oder einer Flüssigkristall-Anzeige anzeigt.

4. Anzeigeeinheit nach einem der vorhergehenden Ansprüche, **dadurch gekennzeichnet, dass** die optische Anzeigeeinheit (5) zusätzlich einen Tongeber (13) aufweist.

5. Anzeigeeinheit nach einem der vorhergehenden Ansprüche, **dadurch gekennzeichnet, dass** die optische Anzeigeeinheit (5) einen Tiefpass-Filter aufweist.

6. Anzeigeeinheit nach einem der vorhergehenden Ansprüche, **dadurch gekennzeichnet, dass** die optische Anzeigeeinheit (5) mit einem ersten Ausgang (6) mit dem Tongeber-Ausgang (4) des Steuergeräts (3) verbunden ist, dass die optische Anzeigeeinheit (5) mit einem zweiten Ausgang (7) mit einem Pluspol (15) des Steuergeräts 3 verbunden ist, und dass die optische Anzeigeeinheit (5) mit einem dritten Ausgang (9) auf Masse liegt.

## Claims

1. Optical display unit (5) for a vehicle parking aid, **characterised in that** the optical display unit (5) is controlled by the sound generator output (4) of a control device (3) and that the optical display unit (5) has an evaluating unit (11) for converting the sound generator signals (4) into control signals for the optical display unit (5).

2. Display unit according to Claim 1, **characterised in that** the evaluating unit (11) is a micro-controller or an electronic evaluating circuit.

3. Display unit according to one of the previous claims, **characterised in that** the optical display unit (5) indicates the distance between the vehicle and an obstacle by means of individual light-emitting diodes or a liquid crystal display.

4. Display unit according to one of the previous claims, **characterised in that** the optical display unit (5) additionally has a sound generator (13).

5. Display unit according to one of the previous claims, **characterised in that** the optical display unit (5) has a low-pass filter.

6. Display unit according to one of the previous claims, **characterised in that** the optical display unit (5) is linked via a first output (6) to the sound generator output (4) of the control device (3), that the optical display unit (5) is linked via a second output (7) to a positive pole (15) of the control device (3) and that the optical display unit (5) is connected via a third output (9) to the chassis.

## Revendications

1. Unité d'affichage (5) visuelle pour une aide au stationnement d'un véhicule automobile, **caractérisée en ce que** l'unité d'affichage (5) visuelle est amorcée par la sortie d'émetteur sonore (4) d'un appareil de commande (3) et **en ce que** l'unité d'affichage (5) visuelle présente un appareil d'analyse (11) pour la conversion des signaux d'émetteur sonore (4) en signaux de commande pour l'unité d'affichage (5) visuelle.

2. Unité d'affichage selon la revendication 1, **caractérisée en ce que** l'appareil d'analyse (11) est un microcontrôleur ou un circuit d'analyse électronique.

3. Unité d'affichage selon l'une quelconque des revendications précédentes, **caractérisée en ce que** l'unité d'affichage (5) visuelle indique la distance entre le véhicule automobile et un obstacle au moyen de diodes électroluminescentes individuelles ou d'un affichage à cristaux liquides.

4. Unité d'affichage selon l'une quelconque des revendications précédentes, **caractérisée en ce que** l'unité d'affichage (5) visuelle présente en supplément un émetteur sonore (13).

5. Unité d'affichage selon l'une quelconque des revendications précédentes, **caractérisée en ce que** l'unité d'affichage (5) visuelle présente un filtre passe-bas.

6. Unité d'affichage selon l'une quelconque des revendications précédentes, **caractérisée en ce que** l'unité d'affichage (5) visuelle est reliée par une première sortie (6) à la sortie d'émetteur sonore (4) de l'appareil de commande (3), **en ce que** l'unité d'affichage (5) visuelle est reliée par une seconde sortie (7) à un pôle plus de l'appareil de commande (15), et **en ce que** l'unité d'affichage (5) visuelle se situe avec une troisième sortie (9) sur la masse.
